# EUROPEAN PATENT APPLICATION

(11) **EP 3 499 690 A1**
(43) Date of publication of application: **19.06.2019**
(21) Application number: 16912747.9
(22) Date of filing: 30.11.2016
(51) Int. Cl.: H02K 5/10

(54) **MOTOR, ACTUATOR, SEMICONDUCTOR MANUFACTURING DEVICE, AND FLAT DISPLAY MANUFACTURING DEVICE**

(30) Priority: 08.08.2016 JP 2016155933
(71) Applicant: NSK Ltd., Tokyo 141-8560 (JP)
(72) Inventor: HIGUCHI, Hideya, Fujisawa-shi Kanagawa 251-8501 (JP); WATANABE, Hayao, Fujisawa-shi Kanagawa 251-8501 (JP); NAKAMURA, Tsuyoshi, Fujisawa-shi Kanagawa 251-8501 (JP)
(74) Representative: SSM Sandmair
(86) International application number: PCT/JP2016/085588
(87) International publication number: WO 2018/029867

(57) **Abstract**

To provide a motor capable of preventing particles generated inside from being emitted to the outside, more reliably. The motor includes: a stator that is provided with a coil and a stator core; a rotor that is disposed on the inner side of the stator in a radial direction, and rotated relatively with respect to the stator; a stator housing that has a first exhaust hole through which the air is exhausted by suctioning, and to which the stator is fixed; a first sealing portion where the stator housing and the rotor housing face each other with a first gap therebetween across the entire circumference in the circumferential direction, with the first sealing portion being provided between an internal space and the outside of the stator housing; and a first squeeze portion that is at a position different from the first sealing portion, and that has a second gap connecting the internal space and the first exhaust hole.

## Description

### Field

The present invention relates to a motor, an actuator, a semiconductor manufacturing apparatus, and a flat display manufacturing apparatus.

### Background

Motors to be used in semiconductor manufacturing apparatuses or flat panel display manufacturing apparatuses, and actuators using such motors are demanded to be highly reliable. Furthermore, in productions of products such as semiconductors and flat panel displays, a production process in a clean environment is required, to avoid contamination of the products with dusts. To ensure high reliability, a motor or an actuator used in a clean environment is required to have some devising for preventing particles generated inside of the motor or the actuator from being emitted to the outside.

For example, Patent Literature 1 discloses a sealing apparatus that prevents entry of particles into a clean environment from an unclean environment, by suctioning the air from a gap formed between an operation axis and two flange portions, by suctioning the air from an air chamber formed between the flange portions.

### Citation List

### Patent Literature

Patent Literature 1: Japanese Patent Application Laid-open No. H09-29682 A

### Summary

### Technical Problem

The sealing apparatus disclosed in Patent Literature 1, however, is designed to suction the air via a gap formed between the operation axis and the flange portion provided on the side of the clean environment, and via a gap formed between the operation axis and the flange portion on the side of the unclean environment. Therefore, a pressure distribution may be formed inside of the air chamber. Furthermore, when there is a pressure difference between the sides of the clean environment and the unclean environment, the air may leak from the unclean environment into the clean environment, and contaminate the clean environment.

The present invention is made in consideration of the above, and an object of the present invention is to provide a motor capable of reducing the possibility of particles from being emitted to the outside from inside where the particles are generated.

### Solution to Problem

To address the issue and to achieve the objective described above, a motor includes a stator that is provided with a coil and a stator core, a rotor that is disposed on an inner side of the stator in a radial direction, and rotated relatively with respect to the stator, a rotor housing that is rotated with the rotor, a stator housing that has a first exhaust hole through which air is exhausted by suctioning, and to which the stator is fixed, a bearing that supports the rotor housing rotatably with respect to the stator housing, a first sealing portion where the stator housing and the rotor housing face each other with a first gap therebetween across an entire circumference in a circumferential direction, with the first sealing portion being provided between an internal space and outside of the stator housing, and a first squeeze portion that is at a position different from the first sealing portion, and that has a second gap connecting the internal space and the first exhaust hole.

With the structure described above, by connecting a suction exhaust device to the exhaust hole, and operating the suction exhaust device, it is possible to reduce the possibility of particles being emitted to the outside from the inside of the motor where the particles are generated.

Further, as a desirable embodiment, it is preferable that the motor further includes a first groove that is positioned between the second gap and the first exhaust hole, and is provided to the stator housing across the entire circumference in the circumferential direction, in a manner extending along the second gap.

With the structure described above, the air is suctioned evenly from the sealing portion, and exhausted evenly from the first squeeze portion into the first exhaust hole via the first groove.

As a desirable embodiment, it is preferable that the second gap is at a position where the stator housing and a first annular member face each other, and a stepped portion is provided to a facing surface of the stator housing, the facing surface facing the first annular member, or to the first annular member.

With the structure described above, it is possible to alleviate a circumferential unevenness of the pressure difference in the air suctioned from the first squeeze portion into the first exhaust hole. Furthermore, the first sealing portion functions effectively even at a low exhaust rate.

As a desirable embodiment, it is preferable that the second gap is at a position where the stator housing and the first annular member face each other, and a spacer member interposed between the stator housing and the first annular member is provided.

With the structure described above, it is possible to alleviate a circumferential unevenness of the pressure difference in the air suctioned from the first squeeze portion into the first exhaust hole. Furthermore, the first sealing portion functions effectively even at a low exhaust rate. Merely by controlling the flatness of the spacer member, the precisions of the part members can be ensured with a smaller number of check items. As a result, the yield rate of the motor as a whole is improved.

As a desirable embodiment, it is preferable that the internal space is partitioned into a first internal space and a second internal space by the bearing, the stator housing also has a second exhaust hole, and the motor further includes the first sealing portion where the stator housing and the rotor housing face each other with the first gap therebetween across the entire circumference in the circumferential direction, with the first sealing portion being provided between the first internal space and the outside, the first squeeze portion that is at a position different from the first sealing portion, and that has the second gap connecting the first internal space and the first exhaust hole, a second sealing portion where the stator housing and the rotor housing face each other with a third gap therebetween across the entire circumference in the circumferential direction, with the second sealing portion being provided between the second internal space and the outside, and a second squeeze portion that is at a position different from the first sealing portion, the second sealing portion, and the first squeeze portion, and that is provided with a fourth gap connecting the second internal space and the second exhaust hole.

With the structure described above, by connecting a suction exhaust device to the first exhaust hole, and operating the suction exhaust device, it is possible to reduce the possibility of particles being emitted to the outside from the first internal space of the motor where the particles are generated. Furthermore, by connecting a suction exhaust device to the second exhaust hole, and operating the suction exhaust device, it is possible to reduce the possibility of particles being emitted to the outside from the second internal space of the motor where the particles are generated.

As a desirable embodiment, it is preferable that the motor further includes a second groove that is positioned between the fourth gap and the second exhaust hole, and that is provided to the entire circumference of the stator housing in the circumferential direction, in a manner extending along the fourth gap.

With the structure described above, the air in the first internal space is suctioned evenly from the first sealing portion, and exhausted evenly from the first squeeze portion to the first exhaust hole via the first groove. Furthermore, the air in the second internal space is suctioned evenly from the second sealing portion, and exhausted evenly from the second squeeze portion into the second exhaust hole via the second groove.

As a desirable embodiment, it is preferable that the fourth gap is at a position where the stator housing and the second annular member face each other, and a stepped portion is provided to a facing surface of the stator housing, the facing surface facing the second annular member, or to the second annular member.

With the structure described above, it is possible to alleviate a circumferential unevenness of the pressure difference in the air suctioned from the second squeeze portion into the second exhaust hole. Furthermore, the second sealing portion functions effectively even at a low exhaust rate.

As a desirable embodiment, it is preferable that the fourth gap is at a position where the stator housing and the second annular member face each other, and a spacer member interposed between the stator housing and the second annular member is provided.

With the structure described above, it is possible to alleviate a circumferential unevenness of the pressure difference in the air suctioned from the second squeeze portion into the second exhaust hole. Furthermore, the second sealing portion functions effectively even at a low exhaust rate.

Further, as a desirable embodiment, it is preferable that the stator housing includes a first stator housing portion that is provided with a first cable insertion hole through which a cable for driving the motor or for detecting a position is passed in an axial direction that is in parallel with a rotation axis of the rotor, and a second stator housing member that is stacked with and fixed to the first stator housing portion in the axial direction, and that is provided with a second cable insertion hole through which the cable is passed in the axial direction. A central position of the first cable insertion hole and a central position of the second cable insertion hole in the radial direction are offset from each other in such a manner that, when the first stator housing portion and the second stator housing portion are stacked with and fixed to each other in the axial direction, an area of an opening where the first cable insertion hole and the second cable insertion hole overlap each other in the axial direction substantially matches a cross-sectional area of the cable.

With the structure described above, a cable is retained. Furthermore, the sealability of the opening where the first cable insertion hole and the second cable insertion hole overlap each other in the axial direction is ensured. As a result, with the first cable insertion hole and the second cable insertion hole, it is possible to reduce the possibility of particles being emitted to the outside from inside where the particles are generated.

As a desirable embodiment, it is preferable that the stator housing includes a groove component member that has a first surface perpendicularly intersecting with an axial direction that is a direction in parallel with a rotation axis of the rotor, and facing the first gap with the rotor housing positioned face-to-face, a second surface facing the second gap and positioned on an opposite side of the first surface, and the first groove, and an O ring that is interposed between the groove component member and another component member making up the stator housing.

With the structure described above, the first gap and the second gap can be provided to different surfaces both of which perpendicularly intersect with the axial direction, with one member having a groove. Therefore, by ensuring the flatness of the member having the groove, the precisions of the part members can be ensured with a smaller number of check items. As a result, the yield rate of the motor as a whole is improved.

Further, as a desirable embodiment, it is preferable that the motor further includes a rotation detector that detects rotation of the rotor with respect to the stator. A driving unit including the stator and the rotor, the bearing, and the rotation detector are arranged and disposed along the axial direction.

With the structure described above, an increase in the size of the motor in the radiating direction with respect to the rotation axis is suppressed, and an increase in the installation area (foot print) of the housing is reduced.

Further, as a desirable embodiment, it is preferable that the motor further includes a rotation detector that detects rotation of the rotor with respect to the stator. A driving unit including the stator and the rotor, and the bearing are arranged and disposed along the radial direction, and the bearing and the rotation detector are arranged and disposed along the axial direction.

With the structure described above, an increase in the size of the motor in the axial direction, that is, an increase in the height in the axial direction is suppressed.

Further, as a desirable embodimemt, it is preferable that the motor further includes a rotation detector that detects rotation of the rotor with respect to the stator. A driving unit including the stator and the rotor, the bearing, and the rotation detector are arranged and disposed along the radial direction.

With the structure described above, an increase in the size of the motor in the axial direction, that is, an increase in the height in the axial direction can be suppressed.

Further, as a desirable embodiment, it is preferable that the bearing is a rolling bearing or a sliding bearing.

With the structure described above, an external power source for driving the bearing is not necessary.

Further, as a desirable embodiment, it is preferable that the bearing is a cross roller bearing.

With the structure described above, high load tolerance in any directions can be achieved, and the rigidity can be maintained to a high level.

To address the issue and to achieve the objective described above, an actuator is provided with the motor described above, and with a driven object driven by the motor. In this manner, an actuator suitable for the use in a clean environment can be achieved.

To address the issue and to achieve the objective described above, a semiconductor manufacturing apparatus is provided with the motor described above. In this manner, a semiconductor manufacturing apparatus suitable for the use in a clean environment can be achieved.

To address the issue and to achieve the objective described above, a flat display manufacturing apparatus is provided with the motor described above. In this manner, a flat display manufacturing apparatus suitable for the use in a clean environment can be achieved.

### Advantageous Effects of Invention

According to the present invention, it is possible to provide a motor capable of reducing the possibility of particles being emitted to the outside from inside where the particles are generated.

### Brief Description of Drawings

FIG. 1A is a cross-sectional view illustrating an example of a motor according to a first embodiment.
FIG. 1B is an enlarged cross-sectional view illustrating an enlargement of a first gap illustrated in FIG. 1A.
FIG. 1C is an enlarged cross-sectional view illustrating an enlargement of a third gap and a fourth gap illustrated in FIG. 1A.
FIG. 2A is a plan view of a first annular member according to the first embodiment seen from a direction indicated by an arrow A in FIG. 1A.
FIG. 2B is a cross-sectional view in a view across the line IIB-IIB' in FIG. 2A.
FIG. 2C is a cross-sectional view illustrating the same cross section as that illustrated in FIG. 2B, with the first annular member fixed to a third stator housing portion.
FIG. 2D is a cross-sectional view providing a partial-cross section of a first annular member fixed to a third stator housing portion according to a first modification of the first embodiment.
FIG. 3A is a plan view of a first annular member according to a second modification of the first embodiment, seen from the direction indicated by the arrow A in FIG. 1A.
FIG. 3B is a cross-sectional view across the arrow IIIB-IIIB' in FIG. 3A.
FIG. 3C is a cross-sectional view illustrating the same cross section as that illustrated in FIG. 3B, with the first annular member fixed to the third stator housing portion with a spacer member.
FIG. 4 is a schematic illustrating an example of a second annular member in the first embodiment.
FIG. 5 is a schematic illustrating an example of a second stator housing portion in the first embodiment.
FIG. 6 is a cross-sectional view illustrating an example of a motor according to a second embodiment.
FIG. 7 is a cross-sectional view illustrating a different example of the motor according to the second embodiment, being different from that illustrated in FIG. 6.
FIG. 8 is a cross-sectional view illustrating an example of a motor according to a third embodiment.
FIG. 9 is a schematic illustrating an application example of the motors according to the embodiments.

### Description of Embodiments

Some embodiments for implementing the present invention will now be explained in detail with reference to drawings. The embodiments described below, however, are not intended to limit the scope of the present invention in any way. Furthermore, the elements described below include those that can be easily thought of by those skilled in the art, and those that are substantially the same. Furthermore, the elements described below may be combined as appropriate.

### (First Embodiment)

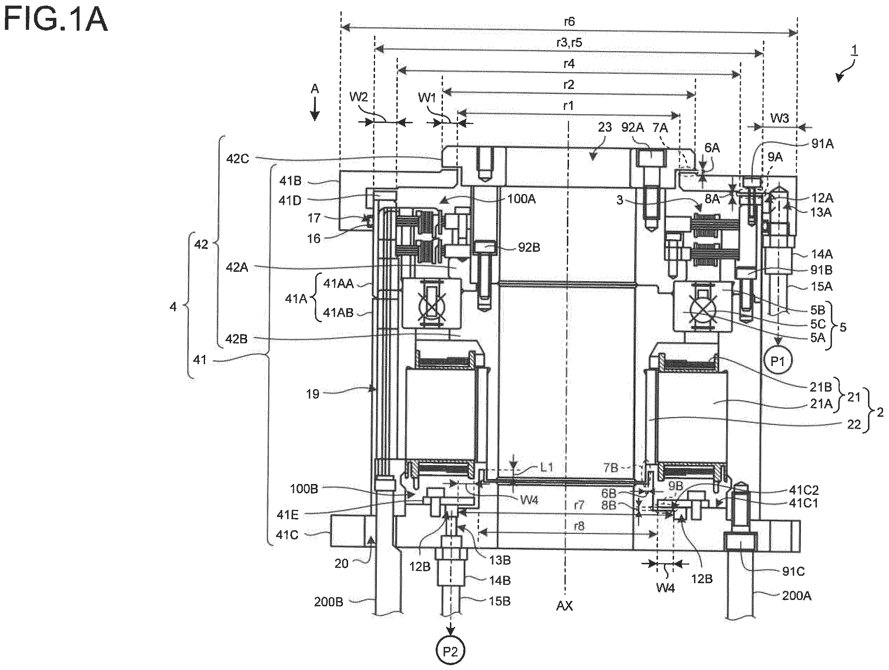

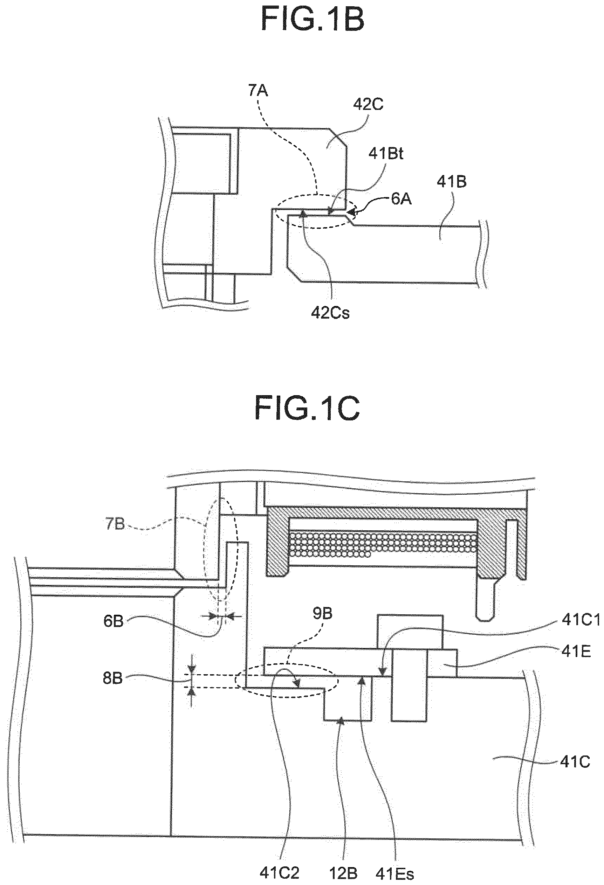

FIG. 1A is a cross-sectional view illustrating an example of a motor according to a first embodiment. FIG. 1B is an enlarged cross-sectional view illustrating an enlargement of a first gap illustrated in FIG. 1A. FIG. 1C is an enlarged cross-sectional view illustrating an enlargement of a third gap and a fourth gap illustrated in FIG. 1A. In FIG. 1A, this motor 1 is a direct drive motor that directly communicates the generated power to an object, not via a decelerating mechanism. As illustrated in FIG. 1A, the motor 1 includes a driving unit 2 that generates power for rotating the object. The driving unit 2 includes a stator 21, and a rotor 22 that is rotatable with respect to the stator 21. The rotor 22 rotates about a rotation axis AX.

The motor 1 includes a rotation detector 3 that detects the rotations of the rotor 22, a housing 4 that holds the driving unit 2 and the rotation detector 3, a cable 200A that is connected to the stator 21, and a cable 200B that is connected to the rotation detector 3. The cables 200A, 200B are connected to a controller not illustrated for controlling the motor 1.

In this embodiment, the motor 1 is an inner rotor motor. The rotor 22 is disposed on the inner side of the stator 21 in the radial direction, with the rotation axis AX at the center. Hereinafter, the radial direction with the rotation axis AX at the center will also be simply referred to as a "radial direction".

The stator 21 has a stator core 21A and a coil 21B that is supported by the stator core 21A. The stator core 21A has a plurality of teeth arranged at an equal interval along the circumferential direction, with the rotation axis AX at the center. Hereinafter, the circumferential direction with the rotation axis AX at the center will also be simply referred to as a "circumferential direction".

The coil 21B is provided in plurality. The coils 21B are supported by the respective teeth of the stator core 21A.

The rotor 22 includes a plurality of permanent magnets disposed at an equal interval in the circumferential direction. The stator 21 and the rotor 22 face each other with a gap therebetween.

The rotation detector 3 detects the rotations of the rotor 22 with respect to the stator 21. The rotation detector 3 includes a resolver, and detects at least one of the rotation speed, the rotational direction, and the rotational angle of the rotor 22 included in the driving unit 2. In this embodiment, the rotation detector 3 includes two types of resolvers, one of which is an absolute resolver and the other of which is an incremental resolver.

The housing 4 includes a stator housing 41, and a rotor housing 42 that is disposed on the inner side of the stator housing 41 in the radial direction. As illustrated in FIG. 1A, each of the stator housing 41 and the rotor housing 42 is a cylindrical member including a plurality of members. The central axis of the stator housing 41, the central axis of the rotor housing 42, and the rotation axis AX are all matched. Hereinafter, a direction in parallel with the rotation axis AX will also be referred to as an "axial direction".

The driving unit 2 including the stator 21 and the rotor 22 is disposed between the stator housing 41 and the rotor housing 42. The stator 21 is connected to the stator housing 41. The stator 21 is fixed to the outer circumferential surface of the stator housing 41. The rotor 22 is connected to the rotor housing 42. The rotor 22 is fixed to the inner circumferential surface of the rotor housing 42.

A bearing 5 is disposed between the stator housing 41 and the rotor housing 42. The bearing 5 has an inner race 5A, an outer race 5B, and rolling bodies 5C disposed between the inner race 5A and the outer race 5B. The bearing 5 holds the rotor housing 42 rotatably about the rotation axis AX, with respect to the stator housing 41.

The stator housing 41 is disposed with respect to the rotor housing 42 in such a manner that a first internal space 100A and a second internal space 100B that are partitioned by the bearing 5 are formed thereby. The first internal space 100A has a first sealing portion 7A where the stator housing 41 and the rotor housing 42 face each other in the axial direction with a first gap 6A therebetween, across the entire circumference in the circumferential direction, and the first internal space 100A is sealed by the first sealing portion 7A. The second internal space 100B has a second sealing portion 7B where the stator housing 41 and the rotor housing 42 face each other in the radial direction with a third gap 6B therebetween, across the entire circumference in the circumferential direction, and the second internal space 100B is sealed by the second sealing portion 7B. The first sealing portion 7A and the second sealing portion 7B will be described later in detail.

As illustrated in FIG. 1A, the stator housing 41 includes a first stator housing portion 41A, a third stator housing portion 41B, a second stator housing portion 41C, a first annular member 41D, and a second annular member 41E.

The first stator housing portion 41A is a cylindrical member, and includes a member 41AA and a member 41AB between which the outer race 5B of the bearing 5 is held in the axial direction. In the first stator housing portion 41A, the member 41AA and the member 41AB are arranged in the order listed herein from the top-end side toward the bottom-end side of the motor 1 according to the first embodiment illustrated in FIG. 1A, in the axial direction.

The stator of the rotation detector 3 is fixed to the inner circumferential surface of the member 41AA of the first stator housing portion 41A. The stator 21 of the driving unit 2 is fixed to the inner circumferential surface of the member 41AB of the first stator housing portion 41A. The member 41AA and the member 41AB are arranged in the order of the member 41AA and the member 41AB from the top-end side to the bottom-end side in the axial direction, and are fastened with a plurality of fastening members 91B, such as male screws, that are arranged in the circumferential direction, for example.

The third stator housing portion 41B has a cylindrical portion that faces and is engaged with outer circumferential surface of the member 41AA of the first stator housing portion 41A. The inner circumferential surface of the cylindrical portion of the third stator housing portion 41B is provided with a first groove 12A having a recessed shape that opens to the inner side in the radial direction, across the entire circumference in the circumferential direction. The third stator housing portion 41B also has an annular portion extending from the cylindrical portion to the inner side in the radial direction. The position of the top end of the first groove 12A in the axial direction is matched with the position of the bottom surface of the annular portion in the axial direction. The first groove 12A will be described later in detail.

The first annular member 41D having an annular shape is disposed between the annular portion of the third stator housing portion 41B and the member 41AA of the first stator housing portion 41A. The first internal space 100A is communicated with the first groove 12A provided to the third stator housing portion 41B, by being provided with a first squeeze portion 9A where the first annular member 41D and the annular portion of the third stator housing portion 41B face each other with a second gap 8A therebetween in the axial direction, with the first squeeze portion 9A being provided across the entire circumference in the circumferential direction. The first squeeze portion 9A will be described later in detail.

The second stator housing portion 41C has an annular portion that faces and is engaged with the inner circumferential surface of the member 41AB of the first stator housing portion 41A, and that extends toward the inner side in the radial direction. On the side of the second internal space 100B, the annular portion of the second stator housing portion 41C is provided with a second groove 12B having a recessed shape that opens to the top-end side in the axial direction, across the entire circumference in the circumferential direction. The second groove 12B will be described later in detail.

The second annular member 41E is disposed on the annular portion of the second stator housing portion 41C on the side facing the second internal space 100B, in a manner covering the second groove 12B from the top-end side in the axial direction. The second internal space 100B is communicated with the second groove 12B provided to the second stator housing portion 41C, by being provided with a second squeeze portion 9B where the second annular member 41E and the annular portion of the second stator housing portion 41C face each other with a fourth gap 8B therebetween in the axial direction, across the entire circumference in the circumferential direction. The second squeeze portion 9B will be described later in detail.

As illustrated in FIG. 1A, the member 41AA of the first stator housing portion 41A, the member 41AB of the first stator housing portion 41A, the third stator housing portion 41B, the second stator housing portion 41C, and the first annular member 41D are arranged and disposed along the order of the third stator housing portion 41B, the first annular member 41D, the member 41AA of the first stator housing portion 41A, the member 41AB of the first stator housing portion 41A, and the second stator housing portion 41C, from the top-end side to the bottom-end side in the axial direction. The third stator housing portion 41B, the first annular member 41D, and the first stator housing portion 41A (the member 41AA) are fastened with a plurality of fastening members 91A, such as male screws, that are arranged in the circumferential direction, for example. The first stator housing portion 41A (the member 41AB) and the second stator housing portion 41C are fastened with a plurality of fastening members 91C, such as male screws, that are arranged in the circumferential direction, for example. The second stator housing portion 41C and the second annular member 41E are fastened with a plurality of fastening members, such as male screws, for example.

The rotor housing 42 is provided with a hollow hole 23 for inserting a power supply cable or a signal cable leading to a product, which is to be manufactured by the semiconductor manufacturing apparatus or the flat display manufacturing apparatus that uses this motor 1.

As illustrated in FIG. 1A, the rotor housing 42 is provided with a first rotor housing portion 42A, a second rotor housing portion 42B, and a third rotor housing portion 42C. The first rotor housing portion 42A, the second rotor housing portion 42B, and the third rotor housing portion 42C are annular or cylindrical members. The first rotor housing portion 42A and the second rotor housing portion 42B hold the inner race 5A of the bearing 5 therebetween in the axial direction.

The rotor of the rotation detector 3 is fixed to the outer circumferential surface of the first rotor housing portion 42A. The rotor 22 is fixed to the outer circumferential surface of the second rotor housing portion 42B. The first rotor housing portion 42A, the second rotor housing portion 42B, and the third rotor housing portion 42C are arranged in the order of the third rotor housing portion 42C, the first rotor housing portion 42A, the second rotor housing portion 42B, from the top-end side to the bottom-end side in the axial direction of the motor 1 according to the first embodiment illustrated in FIG. 1A. The third rotor housing portion 42C and the first rotor housing portion 42A are fastened with a plurality of fastening members 92A, such as male screws, that are arranged in the circumferential direction, for example. The first rotor housing portion 42A and the second rotor housing portion 42B are fastened with a plurality of fastening members 92B, such as male screws, that are arranged in the circumferential direction, for example.

The stator housing 41 and the rotor housing 42 are not limited to the structures described above. The stator housing 41 may be made from any plurality of members including a member provided with the first groove 12A, a member forming the second gap 8A with the member provided with the first groove 12A, a member provided with the second groove 12B, and a member forming the fourth gap 8B together with the member provided with the second groove 12B, for example. Furthermore, the rotor housing 42 may be made from one member, or two or more members, for example.

In the motor 1 according to the first embodiment, the driving unit 2 including the stator 21 and the rotor 22, the bearing 5, and the rotation detector 3 are arranged and disposed along the axial direction. With this configuration, an increase in the size of the motor 1 in the radiating direction with respect to the rotation axis AX is suppressed, and an increase in the installation area (foot print) of the housing 4 is suppressed.

In the motor 1 according to the first embodiment having the structure described above, by causing the rotor 22 to rotate with respect to the stator 21, the rotor housing 42 is caused to rotate about the rotation axis AX with respect to the stator housing 41.

A workpiece (not illustrated) is placed on the rotor housing 42. When the rotor housing 42 is rotated by the operation of the driving unit 2, the workpiece and the rotor housing 42 are both caused to rotate. The rotor housing 42 serves as an output shaft that is rotated about the rotation axis AX, as the driving unit 2 is operated.

The first sealing portion 7A will now be explained. In this embodiment, in the first sealing portion 7A, the third stator housing portion 41B and the third rotor housing portion 42C face each other in axial direction with the first gap 6A having a size of 0.1 millimeter to 0.5 millimeter or so therebetween, across the entire circumference in the circumferential direction, for example. As illustrated in FIG. 1A, in this embodiment, the inner diameter r1 of the third stator housing portion 41B is smaller than the outer diameter r2 of the third rotor housing portion 42C. Therefore, the first sealing portion 7A is provided to the range W1 where the third stator housing portion 41B and the third rotor housing portion 42C face each other with the first gap 6A therebetween in the axial direction.

The first squeeze portion 9A will now be explained. In this embodiment, the first squeeze portion 9A is formed by the member 41AA of the first stator housing portion 41A and the third stator housing portion 41B facing each other in the axial direction, with the second gap 8A having a size of several micrometers to several tens of micrometers or so therebetween, for example.

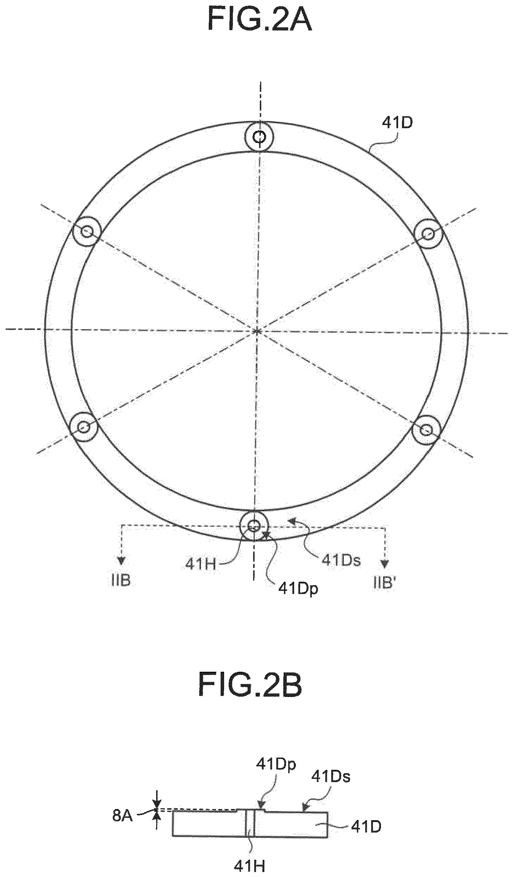

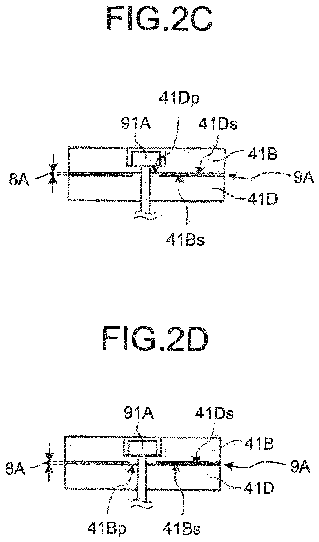

FIG. 2A is a plan view of the first annular member according to the first embodiment, seen from the direction indicated by the arrow A in FIG. 1A. FIG. 2B is a cross-sectional view in a view across the line IIB-IIB' in FIG. 2A. FIG. 2C is a cross-sectional view illustrating the same cross section as that illustrated in FIG. 2B, with the first annular member fixed to the third stator housing portion. In FIG. 2A, in order to allow the first stator housing portion 41A and the third stator housing portion 41B to hold and to fix the first annular member 41D therebetween, the first annular member 41D is provided with six screw holes 41H. The number of the screw holes 41H provided to the first annular member 41D is, however, not limited thereto.

As illustrated in FIGS. 2A and 2B, the first annular member 41D is provided with protrusions 41Dp, on a reference surface 41Ds of the first annular member 41D. As illustrated in FIG. 2C, a second surface 41Bs of the third stator housing portion 41B facing the first annular member 41D (facing surface) is flat. The second surface 41Bs of the third stator housing portion 41B is then brought into abutment with the protrusion 41Dp. There is a stepped portion between the surface of the protrusion 41Dp facing the third stator housing portion 41B and the reference surface 41Ds of the first annular member 41D. In this manner, the reference surface 41Ds of the first annular member 41D and the second surface 41Bs of the third stator housing portion 41B face each other with the second gap 8A therebetween. Specifically, as the protrusions 41Dp, the thickness of the areas surrounding the screw holes 41H provided to the first annular member 41D in the axial direction is set greater than that of the other area (the reference surface 41Ds of the first annular member 41D), by a thickness corresponding to the second gap 8A. In this manner, when the third stator housing portion 41B and the first annular member 41D are combined, the first squeeze portion 9A where the first annular member 41D and the third stator housing portion 41B face each other in the axial direction with the second gap 8A therebetween is formed. As illustrated in FIG. 1A, in this embodiment, the first squeeze portion 9A is provided in a manner covering a range corresponding to a radial direction width W2 between the outer diameter r3 and the inner diameter r4 of the first annular member 41D.

FIG. 2D is a cross-sectional view providing a partial-cross section of a first annular member fixed to a third stator housing according to a first modification of the first embodiment. The position illustrated in FIG. 2D is the same as that cross section illustrated in FIG. 2C. As illustrated in FIG. 2D, in the first modification of the first embodiment, the reference surface 41Ds of the first annular member 41D facing the third stator housing portion 41B is a flat surface. The first annular member 41D is not provided with a stepped portion for forming the second gap 8A with the third stator housing portion 41B. Protrusions 41Bp are provided to a facing surface 41Bs of the third stator housing portion 41B facing the first annular member 41D. As the protrusions 41Bp, the thickness of the areas surrounding the holes provided to the third stator housing portion 41B in the axial direction is set greater than that of the second surface 41Bs, by a thickness corresponding to the second gap 8A. The reference surface 41Ds of the first annular member 41D is then brought into abutment with the protrusions 41Bp. In the third stator housing portion 41B, there is a stepped portion between the second surface 41Bs and the surface of the protrusions 41Bp facing the first annular member 41D. In this manner, the reference surface 41Ds of the first annular member 41D and the second surface 41Bs of the third stator housing portion 41B face each other with the second gap 8A therebetween. The third stator housing portion 41B is provided with a stepped portion for forming the second gap 8A with the first annular member 41D. As explained above, the second gap 8A is at a position where the third stator housing portion 41B of the stator housing 41 and the first annular member 41D face each other, and a stepped portion is provided to one of the first annular member 41D and the facing surface of the third stator housing portion 41B facing the first annular member 41D.

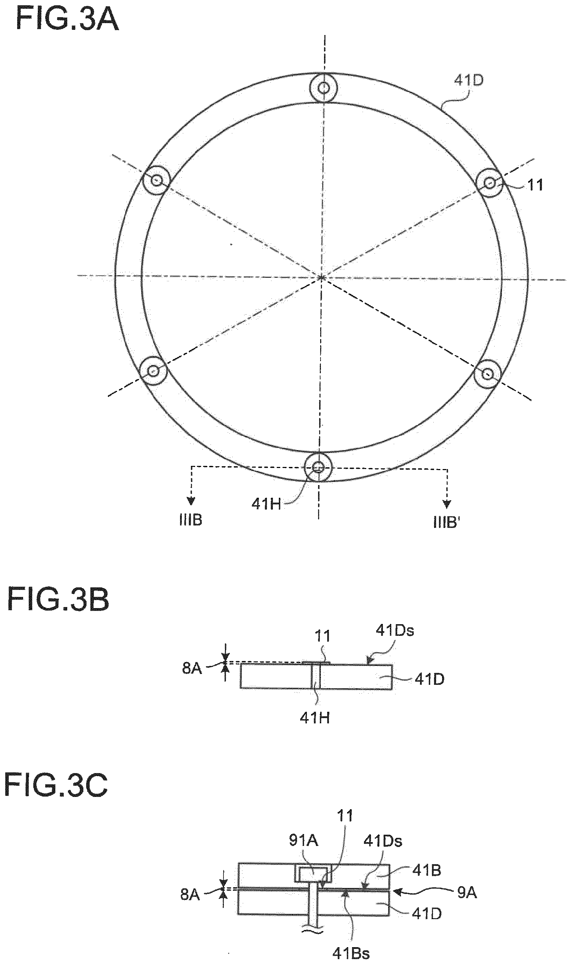

FIG. 3A is a plan view of a first annular member according to a second modification of the first embodiment, seen from the direction indicated by the arrow A in FIG. 1A. FIG. 3B is a cross-sectional view across the arrow IIIB - IIIB' in FIG. 3A. FIG. 3C is a cross-sectional view illustrating the same cross section as that illustrated in FIG. 3B, with the first annular member fixed to the third stator housing portion with a spacer member. The elements that are the same as those according to the first embodiment are given the same reference signs, and explanations thereof will be omitted. As illustrated in FIG. 1A, because the first stator housing portion 41A and the third stator housing portion 41B hold and fix the first annular member 41D therebetween, six screw holes 41H are provided to the first annular member 41D. The number of the screw holes 41H provided to the first annular member 41D is, however, not limited thereto. A spacer member 11 is a member having a shape of a flat washer having a certain thickness corresponding to the second gap 8A in the axial direction. As illustrated in FIGS. 3A and 3B, the spacer member 11 is provided around each of the screw holes 41H in such a manner that the center of the pass-through hole provided to the spacer member 11 is matched with the center of the corresponding screw hole 41H. As illustrated in FIG. 3C, the spacer member 11 for forming the second gap 8A is interposed between the first annular member 41D and the third stator housing portion 41B.

As illustrated in FIG. 1A, the third stator housing portion 41B has a first surface 41Bt (see FIG. 1B) that perpendicularly intersects with the axial direction and that faces the first gap 6A (first suction side gap), with a surface 42Cs of the rotor housing 42 positioned face-to-face thereto in the axial direction, the second surface 41Bs (see FIG. 2C) that faces the second gap 8A (first exhaust side gap) and that is on the opposite side of the first surface 41Bt, and the first groove 12A. In this manner, the precision of the parts can be controlled with a smaller number of check items, advantageously, because it will be sufficient if the flatness of the first surface 41Bt, the flatness of the second surface 41Bs, and the size of the stepped portion for forming the second gap 8A between the first annular member 41D and the third stator housing portion 41B are provided as the check items. As a result, a yield rate is improved. In the first embodiment, the size of the stepped portion for ensuring the second gap 8A corresponds to the thickness of the protrusion 41Dp. In the first modification of the first embodiment, the size of the stepped portion for ensuring the second gap 8A corresponds to the thickness of the protrusions 41Bp. In the first modification of the first embodiment, the size of the stepped portion for ensuring the second gap 8A corresponds to the thickness of the spacer member 11.

The outer diameter r6 of the third stator housing portion 41B is larger than the outer diameter r5 of the first stator housing portion 41A, and the cylindrical portion of the third stator housing portion 41B has an engaging portion that faces and is engaged with the outer side of the first stator housing portion 41A in the radial direction. The first groove 12A is provided to the cylindrical portion of the third stator housing portion 41B, across the entire circumference in the circumferential direction, and is communicated with the first internal space 100A via the second gap 8A in the first squeeze portion 9A, across the entire circumference in the circumferential direction.

The third stator housing portion 41B is also provided with a first exhaust hole 13A that opens to the bottom end in the axial direction, and to which an exhaust tube 15A of a suction exhaust device P1, such as a vacuum pump, is connected via a joint 14A, in a manner communicated with the first groove 12A, within the range of a width W3 between the outer diameter r5 of the first stator housing portion 41A and the outer diameter r6 of the third stator housing portion 41B in the radial direction. The third stator housing portion 41B is also provided with a recess 16 across the entire circumference in the circumferential direction, on an engaging surface that overlaps with the member 41AA of the first stator housing portion 41A in the radial direction, and an O ring 17 is provided to the recess 16. The presence of this O ring 17 between the third stator housing portion 41B and another constituting member, e.g., the member 41AA of the first stator housing portion 41A, ensures the air tightness on the engaging surface where the member 41AA of the first stator housing portion 41A overlaps with the third stator housing portion 41B in the radial direction. If the member 41AA of the first stator housing portion 41A is engaged with the third stator housing portion 41B highly precisely, it is possible to omit the processing of the recess 16 on the third stator housing portion 41B and the O ring 17. However, by providing the recess 16 and the O ring 17, the precision of the processing of the engaging surface between the member 41AA of the first stator housing portion 41A and the third stator housing portion 41B can be reduced, whereas an acceptable range of the processing precision can be increased. As a result, the yield rate is improved.

The second sealing portion 7B will now be explained. In this embodiment, the second sealing portion 7B is formed by providing the second stator housing portion 41C and the second rotor housing portion 42B in a manner overlapping with each other with the third gap 6B having a size of 0.1 millimeter to 0.5 millimeter or so therebetween in the radial direction, across the entire circumference in the circumferential direction. In this embodiment, the second sealing portion 7B is provided to a range L1 where the second stator housing portion 41C and the second rotor housing portion 42B face each other in the radial direction with the third gap 6B therebetween, as illustrated in FIG. 1A.

The second squeeze portion 9B will now be explained. In this embodiment, the second squeeze portion 9B is formed by providing the second stator housing portion 41C and the second annular member 41E in a manner overlapping each other with the fourth gap 8B having a size of several micrometers to several tens of micrometers or so, for example, therebetween in the axial direction.

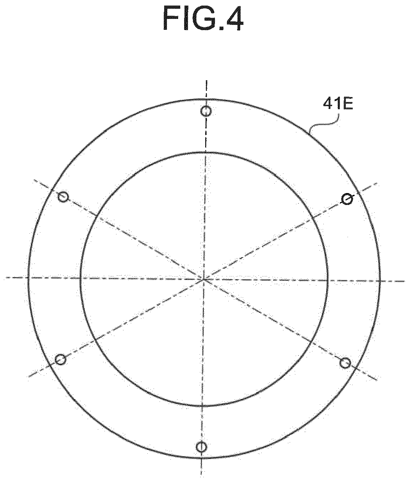

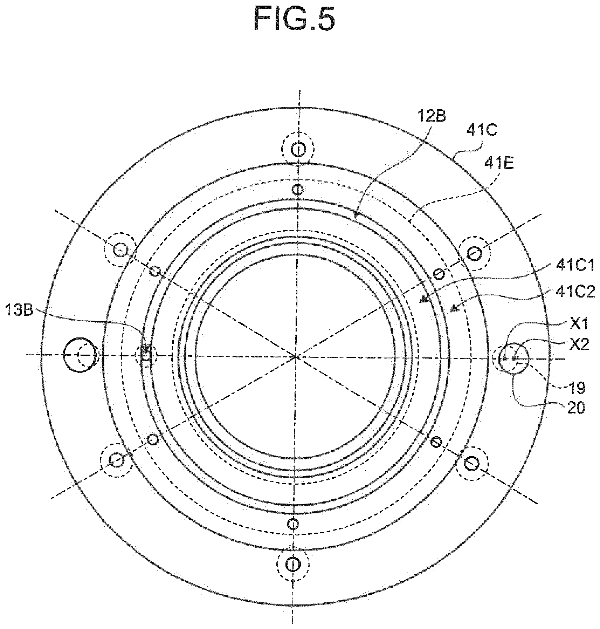

FIG. 4 is a schematic illustrating an example of the second annular member in the first embodiment. FIG. 4 is a plan view of the second annular member 41E in the view from the direction indicated by the arrow A in FIG. 1A. FIG. 5 is a schematic illustrating an example of the second stator housing portion in the first embodiment. FIG. 5 is a plan view of the second stator housing portion 41C in the view from the direction indicated by the arrow A in FIG. 1A. In FIGS. 4 and 5, six screw holes for fixing the second annular member 41E to the second stator housing portion 41C are provided, but the number of screw holes is not limited thereto.

In FIGS. 1C, 4, and 5, a surface 41Es of the second annular member 41E facing the second stator housing portion 41C is flat. As described earlier, the second groove 12B is provided to the annular portion of the second stator housing portion 41C across the entire circumference, on the side of the second internal space 100B. The groove 12B is provided between a surface 41C1 and a surface 41C2 in the radial direction. Furthermore, in FIGS. 1C, 4, and 5, the surface 41C1 and the surface 41C2 of the second stator housing portion 41C facing the second annular member 41E have a stepped portion for forming the fourth gap 8B between the second stator housing portion 41C and the second annular member 41E that is the second annular member. In this manner, when the second stator housing portion 41C and the second annular member 41E are combined, the second squeeze portion 9B where the second annular member 41E and the second stator housing portion 41C face each other with the fourth gap 8B therebetween in the axial direction is formed across the entire circumference in the circumferential direction.

In this embodiment, as illustrated in FIG. 1A, the inner diameter r8 of the second annular member 41E is smaller than the inner diameter r7 of the second groove 12B provided to the second stator housing portion 41C. Therefore, the second squeeze portion 9B is provided to the range of a radial direction width W4 between the inner diameter r7 of the second groove 12B provided to the second stator housing portion 41C and the inner diameter r8 of the second annular member 41E. The second groove 12B is communicated with the second internal space 100B across the entire circumference in the circumferential direction, via the fourth gap 8B in the second squeeze portion 9B.

It is also possible, unlike the example described above, to provide the surface of the second annular member 41E facing the second stator housing portion 41C with a stepped portion for forming the fourth gap 8B between the second annular member 41E and the second stator housing portion 41C, instead of forming the stepped portion on the surface 41C1 and the surface 41C2 of the second stator housing portion 41C facing the second annular member 41E. Furthermore, in the example illustrated in FIG. 1A, the second squeeze portion 9B is provided on the inner side, in the radial direction, of where the second stator housing portion 41C and the second annular member 41E overlap with each other, but it is also possible to provide the stepped portion to the surface of the second stator housing portion 41C facing the second annular member 41E and to provide the second squeeze portion 9B on the outer side, in the radial direction, of where the second stator housing portion 41C and the second annular member 41E overlap each other. It is also possible to provide the stepped portion to the surface of the second annular member 41E facing the second stator housing portion 41C, and to provide the second squeeze portion 9B on the outer side, in the radial direction, of where the second stator housing portion 41C and the second annular member 41E overlap each other. Furthermore, it is also possible to configure the second stator housing portion 41C and the second annular member 41E to be brought into contact only via areas around the screw holes, and to provide the second squeeze portion 9B on both sides, in the radial direction, of where the second stator housing portion 41C and the second annular member 41E overlap each other.

Furthermore, a spacer member for forming the fourth gap 8B may be provided between the second stator housing portion 41C and the second annular member 41E. Moreover, such a spacer member may be a member having a shape of a flat washer having a thickness corresponding to the size of the fourth gap 8B in the axial direction, and the second squeeze portion 9B may be provided to both sides, in the radial direction, of where the second stator housing portion 41C and the second annular member 41E overlap each other.

With the structures described above, because it will be sufficient if the flatness of the surface of the second stator housing portion 41C facing the second annular member 41E, the flatness of surface of the second annular member 41E facing the second stator housing portion 41C, and the size of the stepped portion for forming the fourth gap 8B between the second annular member 41E and the second stator housing portion 41C are provided as the check items, the precision of the parts can be controlled with a smaller number of check items, advantageously. As a result, the yield rate is improved.

Furthermore, in FIGS. 1A and 5, the second stator housing portion 41C is provided with a second exhaust hole 13B in a manner communicated with the second groove 12B. The second exhaust hole 13B opens in a manner penetrating the second stator housing portion 41C in the axial direction, and an exhaust tube 15B of a suction exhaust device P2, such as a vacuum pump, is connected to the second exhaust hole 13B via a joint 14B.

Furthermore, as illustrated in FIG. 1A, a first cable insertion hole 19 for inserting the cables 200A, 200B is provided to the first stator housing portion 41A in the axial direction. A second cable insertion hole 20 communicated with the first cable insertion hole 19 and through which the cables 200A, 200B are inserted is provided to the second stator housing portion 41C in axial direction. In the example illustrated in FIG. 1A, the first cable insertion hole 19 and the second cable insertion hole 20 for the cable 200A are not illustrated. Without limitation to the first stator housing portion 41A and the second stator housing portion 41C, the second cable insertion hole 20 and the first cable insertion hole 19 may be provided to any members of the stator housing 41, as long as the member having the second cable insertion hole 20 is in a positional relation to be stacked on top of the member with the first cable insertion hole 19 and fixed thereto in the axial direction.

As illustrated in FIG. 5, the positions where the first cable insertion hole 19 and the second cable insertion hole 20 overlap with each other in the axial direction are offset from each other. Specifically, when the first stator housing portion 41A and the second stator housing portion 41C are engaged in the axial direction, the central position X1 of the first cable insertion hole 19 in the radial direction is offset from the central position X2 of the second cable insertion hole 20 in the radial direction in such a manner that the area of the opening where the first cable insertion hole 19 and the second cable insertion hole 20 overlap each other substantially matches the cross-sectional area of the cables 200A, 200B. In this manner, the air tightness in the opening where the first cable insertion hole 19 and the second cable insertion hole 20 overlap each other in the axial direction is ensured.

Motors intended to be used in semiconductor manufacturing apparatuses or flat panel display manufacturing apparatuses, and actuators using such motors are demanded to be highly reliable. Furthermore, in the production of products such as semiconductors and flat panel displays, a production process using a clean environment is required, to avoid contamination of the products with dust. To ensure high reliability, a motor or an actuator used in a clean environment is required to have some devising for preventing particles generated inside of the motor or the actuator from being emitted to the outside.

A possible source of particles generated inside of a motor or an actuator is emissions of particles from lubricant grease used in a bearing or the like. In a production process of products such as semiconductor devices or flat panel displays in a clean environment, such particles emitted from the lubricant grease may become a contamination source, and become a cause of defects resulting in a loss in the commercial value. Therefore, it is quite common to use a low-particle grease with low particle producing characteristics in a motor or an actuator to be used in a production process of products such as semiconductor devices or flat panel displays, as the lubricant grease used in a bearing or the like.

In this embodiment, in the structure described above, the suction exhaust device P1 is connected to the first exhaust hole 13A provided to the third stator housing portion 41B. The suction exhaust device P2 is then connected to the second exhaust hole 13B provided to the second stator housing portion 41C. When the suction exhaust devices P1, P2 are operated, the air in the first groove 12A and the air in the second groove 12B are suctioned thereby.

In the motor 1 according to the first embodiment, the first squeeze portion 9A and the second squeeze portion 9B are provided across the entire circumference in the circumferential direction, and the second gap 8A in the first squeeze portion 9A and the fourth gap 8B in the second squeeze portion 9B are extremely small within the range from several micrometers to several tens of micrometers or so. Therefore, even if the suction exhaust devices P1, P2 have a low sucking power and a low exhaust rate, the sucking pressure can be evened out across the entire circumference of the first squeeze portion 9A and the second squeeze portion 9B in the circumferential direction. In this manner, the first internal space 100A and the second internal space 100B are sealed effectively.

Furthermore, as described earlier, in the motor 1 according to the first embodiment, the first gap 6A in the first sealing portion 7A and the third gap 6B in the second sealing portion 7B are 0.1 millimeter to 0.5 millimeter or so, for example. Even if the first gap 6A and the third gap 6B are larger than the second gap 8A in the first squeeze portion 9A and the fourth gap 8B in the second squeeze portion 9B, the first internal space 100A and the second internal space 100B can be sealed effectively, because the sucking pressure can be evened out due to the presence of the first squeeze portion 9A and the second squeeze portion 9B described above. In other words, in the motor 1 according to the first embodiment, because the air flows into the first sealing portion 7A and the second sealing portion 7B evenly across the entire circumference in the circumferential direction, the first internal space 100A and the second internal space 100B are sealed effectively. Therefore, it is possible to prevent the particles generated in the first internal space 100A and the second internal space 100B from being emitted to the outside, reliably.

In the manner described above, the motor 1 according to the first embodiment enables the first sealing portion 7A and the second sealing portion 7B to function effectively at a low exhaust rate, and can prevent the particles generated in the first internal space 100A and the second internal space 100B in the motor 1 from being emitted to the outside, more reliably.

Furthermore, because the particles generated inside of the motor 1 is prevented from being emitted to the outside via the first sealing portion 7A and the second sealing portion 7B, in the motor 1 according to the first embodiment, a mechanical bearing such as a rolling bearing or a sliding bearing not requiring any external power source such as a power supply or compressed air can be used as the bearing 5.

Furthermore, because it is not necessary to use a low-particle grease having low particle producing characteristics as a lubricant grease for lubricating a moving part such as the bearing 5, an optimal lubricant grease suitable for the driving conditions can be used.

Furthermore, in the first squeeze portion 9A, in order to control the precision of the second gap 8A, it is sufficient if the flatness of the surface of the third stator housing portion 41B facing the first annular member 41D, the flatness of the surface of the first annular member 41D facing the third stator housing portion 41B, and the size of the stepped portion for forming the second gap 8A between the first annular member 41D and the third stator housing portion 41B are provided as the check items. Furthermore, in order to control the precision of the fourth gap 8B for providing the second squeeze portion 9B, it is sufficient if the flatness of the surface of the second stator housing portion 41C facing the second annular member 41E, the flatness of the surface of the second annular member 41E facing the second stator housing portion 41C, and the size of the stepped portion for forming the fourth gap 8B between the second annular member 41E and the second stator housing portion 41C are provided as the check items. Therefore, the precision of the parts can be controlled with a smaller number of check items, and, as a result, the yield rate of the motor 1 can be improved.

As explained above, the motor 1 according to the first embodiment includes the stator 21 that is provided with the coil 21B and the stator core 21A, the rotor 22 that is disposed on the inner side of the stator 21 in the radial direction, and rotated relatively with respect to the stator 21, the rotor housing 42 that is rotated with the rotor 22, the bearing 5 that supports the rotor housing 42 rotatably with respect to the stator housing 41, and the stator housing 41 to which the stator 21 is fixed, and that is disposed in such a manner that the first internal space 100A and the second internal space 100B partitioned by the bearing 5 are formed between the stator housing 41 and the rotor housing 42.

The stator housing 41 has the first exhaust hole 13A and the second exhaust hole 13B. The motor 1 according to the first embodiment is provided with the first sealing portion 7A where the stator housing 41 and the rotor housing 42 faces each other with the first gap 6A (first suction side gap) therebetween, across the entire circumference in the circumferential direction, with the first sealing portion 7A being provided between the first internal space 100A and the outside. The motor 1 according to the first embodiment includes the first squeeze portion 9A that is at a different position from the first sealing portion 7A, and that has the second gap 8A (first exhaust side gap) connecting the first internal space 100A and the first exhaust hole 13A.

As illustrated in FIGS. 1A and 1C, the motor 1 according to the first embodiment is provided with the second sealing portion 7B where the stator housing 41 and the rotor housing 42 face each other with the third gap 6B (second suction side gap) therebetween, across the entire circumference in the circumferential direction, with the second sealing portion 7B being provided between the second internal space 100B and the outside. The motor 1 according to the first embodiment is provided with the second squeeze portion 9B that has the fourth gap 8B (second exhaust side gap) that is at the different positions from the first sealing portion 7A, the second sealing portion 7B, and the second gap 8A, and that connects the second exhaust hole 13B to the second internal space 100B.

With the structure described above, by connecting the suction exhaust device P1 to the first exhaust hole 13A and operating the suction exhaust device P1, it is possible to reduce the possibility of particles being emitted to the outside from the first internal space 100A of the motor 1 where the particles are generated. Furthermore, by connecting the suction exhaust device P2 to the second exhaust hole 13B and operating the suction exhaust device P2, it is possible to reduce the possibility of particles being emitted to the outside from the second internal space 100B of the motor 1 where the particles are generated.

The motor 1 according to the first embodiment is provided with the first groove 12A that is positioned between the second gap 8A and the first exhaust hole 13A, and that is provided to the entire circumference of the third stator housing portion 41B of the stator housing 41 in the circumferential direction, in a manner extending along the second gap 8A. By connecting the suction exhaust device P1 to the first exhaust hole 13A and operating the suction exhaust device P1, the air is suctioned evenly from the first sealing portion 7A, and exhausted evenly from the first squeeze portion 9A into the first exhaust hole 13A via the first groove 12A. In this manner, because the first internal space 100A inside of the motor 1 are sealed effectively, the particles generated in the first internal space 100A can be prevented from being emitted to the outside, reliably.

Furthermore, the motor 1 according to the first embodiment is provided with the second groove 12B that is positioned between the fourth gap 8B and the second exhaust hole 13B, and that is provided to the entire circumference of the second stator housing portion 41C of the stator housing 41 in the circumferential direction, in a manner extending along the fourth gap 8B. By connecting the suction exhaust device P2 to the second exhaust hole 13B and operating the suction exhaust device P2, the air is suctioned evenly from the second sealing portion 7B, and exhausted evenly from the second squeeze portion 9B into the second exhaust hole 13B via the second groove 12B. In this manner, because the second internal space 100B of the motor 1 is sealed effectively, the particles generated in the second internal space 100B can be prevented from being emitted to the outside, reliably.

Furthermore, the number of check items for controlling the precision of the second gap 8A in the first squeeze portion 9A and the fourth gap 8B in the second squeeze portion 9B can be kept small. As a result, the yield rate in the production of the motor 1 can be improved.

Furthermore, the motor 1 according to the first embodiment, a mechanical bearing such as a rolling bearing or a sliding bearing not requiring any external power source such as a power supply or compressed air can be used.

Furthermore, in the motor 1 according to the first embodiment, because it is not necessary to use a low-particle grease having low particle producing characteristics as a lubricant grease for lubricating a moving part, an optimal lubricant grease suitable for the driving conditions can be used.

### Second Embodiment

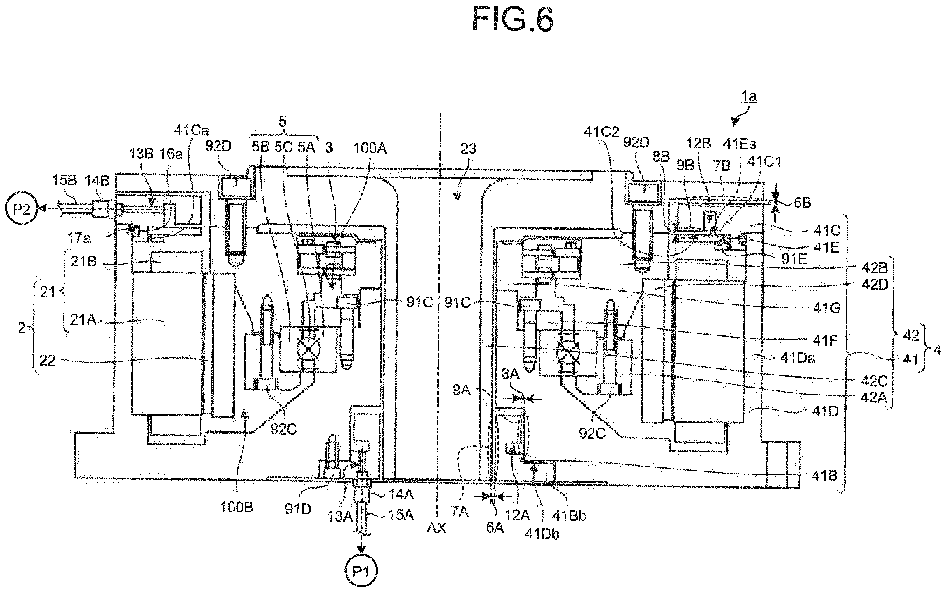

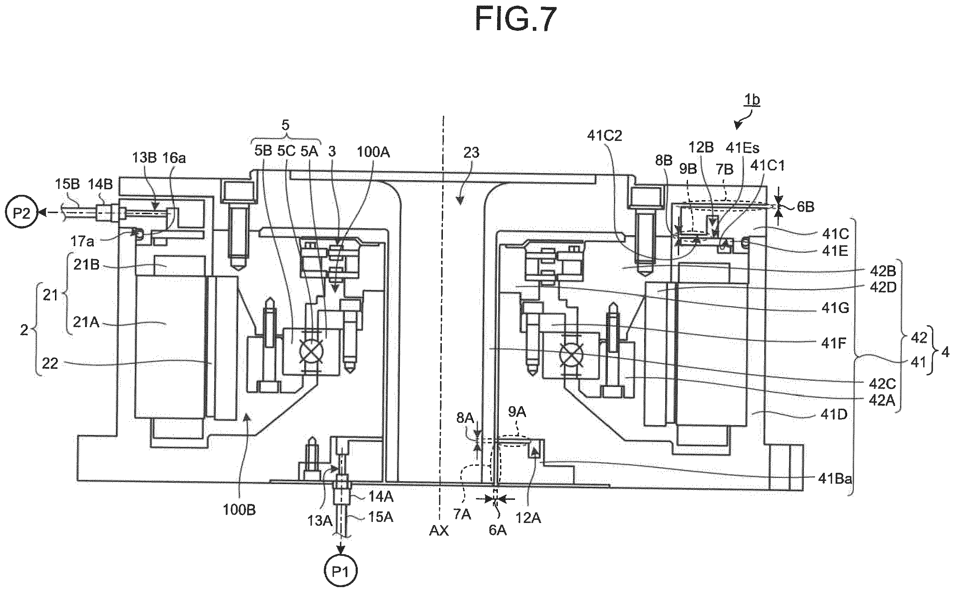

FIG. 6 is a cross-sectional view illustrating an example of a motor according to a second embodiment. FIG. 7 is a cross-sectional view illustrating a different example of the motor according to the second embodiment, being different from that illustrated in FIG. 6. The elements that are the same as those described in the first embodiment are given the same reference signs, and redundant explanations thereof will be omitted.

This motor 1a according to the second embodiment illustrated in FIG. 6 is an inner rotor motor, in the same manner as in the motor 1 according to the first embodiment.

As illustrated in FIG. 6, the stator housing 41 includes the third stator housing portion 41B, the second stator housing portion 41C, the first annular member 41D, the second annular member 41E, a bearing support member 41F, and a rotation detector fixing portion 41G. The third stator housing portion 41B, the second stator housing portion 41C, the first annular member 41D, the second annular member 41E, the bearing support member 41F, and the rotation detector fixing portion 41G are annular or cylindrical members. In this embodiment, the first annular member 41D also serves as a first stator housing portion.

Furthermore, as illustrated in FIG. 6, the rotor housing 42 includes the first rotor housing portion 42A, the second rotor housing portion 42B, the third rotor housing portion 42C, and a fourth rotor housing portion 42D. The first rotor housing portion 42A, the second rotor housing portion 42B, the third rotor housing portion 42C, and the fourth rotor housing portion 42D are annular or cylindrical members. The first rotor housing portion 42A and the second rotor housing portion 42B hold the outer race 5B of the bearing 5 therebetween in the axial direction. The rotor of the rotation detector 3 is fixed to the inner circumferential surface of the second rotor housing portion 42B. The first rotor housing portion 42A and the second rotor housing portion 42B are arranged in the order of the second rotor housing portion 42B and the first rotor housing portion 42A from the top-end side to the bottom-end side in the axial direction in FIG. 6. The second rotor housing portion 42B and the first rotor housing portion 42A are fastened with a plurality of fastening members 92C, such as male screws, that are arranged in the circumferential direction, for example. The rotor 22 is fixed to the outer circumferential surface of the fourth rotor housing portion 42D. The second rotor housing portion 42B and the third rotor housing portion 42C are arranged in the order of the second rotor housing portion 42B and the fourth rotor housing portion 42D, from the top-end side to the bottom-end side in the axial direction in FIG. 6. The second rotor housing portion 42B and the fourth rotor housing portion 42D are fastened with a plurality of fastening members (not illustrated), such as male screws, that are arranged in the circumferential direction, for example. The second rotor housing portion 42B and the fourth rotor housing portion 42D are arranged in the order of the fourth rotor housing portion 42D and the second rotor housing portion 42B, from the top-end side to the bottom-end side in the axial direction in FIG. 6. The second rotor housing portion 42B and the fourth rotor housing portion 42D are fastened with a plurality of fastening members 92D such as male screws, for example.

The first annular member 41D of the stator housing 41 has a cylindrical portion 41Da having an inner circumferential surface to which the stator 21 of the driving unit 2 is fixed. Furthermore, the first annular member 41D, together with the bearing support member 41F, holds the inner race 5A of the bearing 5 therebetween in the axial direction. The stator of the rotation detector 3 is fixed to the outer circumferential surface of the rotation detector fixing portion 41G. The first annular member 41D and the bearing support member 41F are arranged in the order of the bearing support member 41F and the first annular member 41D from the top-end side to the bottom-end side in the axial direction in FIG. 6. The bearing support member 41F and the first annular member 41D are fastened with a plurality of fastening members 91C, such as male screws, that are arranged in the circumferential direction, for example. The first annular member 41D and the rotation detector fixing portion 41G are arranged in the order of the rotation detector fixing portion 41G and the first annular member 41D, from the top-end side to the bottom-end side in the axial direction in FIG. 6, and are fastened with a plurality of fastening members (not illustrated), such as male screws, that are arranged in the circumferential direction, for example.

The first groove 12A having a recessed shape that opens to the outer side in the radial direction is provided to the outer circumferential surface of the third stator housing portion 41B, across the entire circumference in the circumferential direction. The third stator housing portion 41B also has a jaw portion 41Bb jutting out to the outer side in the radial direction. In the third stator housing portion 41B, the jaw portion 41Bb is engaged with a recess 41Db of the first annular member 41D, and provides the first squeeze portion 9A where the outer circumferential surface of the third stator housing portion 41B and the inner circumferential surface of the first annular member 41D face each other with the second gap 8A therebetween in the radial direction, across the entire circumference in the circumferential direction. In this manner, the first internal space 100A is communicated with the first groove 12A provided to the outer circumferential surface of the cylindrical portion 41Bc of the third stator housing portion 41B.

Furthermore, the inner circumferential surface of the third stator housing portion 41B is provided with the first sealing portion 7A where the inner circumferential surface of the third stator housing portion 41B faces the third rotor housing portion 42C in the radial direction, with the first gap 6A therebetween in the radial direction, across the entire circumference in the circumferential direction. The third stator housing portion 41B and the first annular member 41D are fastened with a plurality of fastening members 91D, such as male screws, that are arranged in the circumferential direction, for example.

In FIG. 6, the surface 41C1 and the surface 41C2 of the second stator housing portion 41C, both surfaces of which face the second annular member 41E, provides a stepped portion for forming the fourth gap 8B with the second annular member 41E that is the second annular member. In this manner, when the second stator housing portion 41C and the second annular member 41E are combined, the second squeeze portion 9B where the second annular member 41E and the second stator housing portion 41C face each other in the axial direction with the fourth gap 8B therebetween is formed across the entire circumference in the circumferential direction. On a side of the second stator housing portion 41C nearer to the second annular member 41E, a protrusion 41Ca protruding further than the surface 41C1 in the axial direction is provided in an annular shape. The outer circumferential surface of the protrusion 41Ca is then engaged with the inner circumferential surface of the cylindrical portion 41Da of the first annular member 41D, and the inner circumferential surface of the protrusion 41Ca is brought into contact with the outer circumferential surface of the second annular member 41E, so that the second annular member 41E is aligned in the radial direction. A recess 16a is provided to the outer circumferential surface of the protrusion 41Ca, across the entire circumference in the circumferential direction, and the O ring 17 is provided in the recess 16a. Because this O ring 17a is interposed between the third stator housing portion 41B and the inner circumferential surface of the cylindrical portion 41Da of the first annular member 41D, the air tightness is ensured. Furthermore, the second stator housing portion 41C is provided with the second groove 12B having a recessed shape that opens toward the bottom end in the axial direction, on the side where the second annular member 41E is disposed, across the entire circumference in the circumferential direction.

The second annular member 41E is disposed in a manner covering the second groove 12B provided to the second stator housing portion 41C from the lower side in the axial direction, and provides the second squeeze portion 9B between the second annular member 41E and the second stator housing portion 41C facing each other in the axial direction with the fourth gap 8B therebetween in the axial direction, across the entire circumference in the circumferential direction. In this manner, the second internal space 100B is communicated with the second groove 12B provided to the second stator housing portion 41C.

Furthermore, the second sealing portion 7B is provided between the top end surface of the second stator housing portion 41C and the third rotor housing portion 42C across the entire circumference in the circumferential direction, in a manner facing the top end surface of the second stator housing portion 41C in the axial direction, with the third gap 6B therebetween in the axial direction. The second stator housing portion 41C and the first annular member 41D are fastened with a plurality of fastening members 92E, such as male screws, that are arranged in the circumferential direction, for example, with the outer circumferential surface of the annular portion of the second stator housing portion 41C engaged with the inner circumferential surface of the cylindrical portion of the first annular member 41D.

The stator housing 41 and the rotor housing 42 are not limited to the structures described above. For example, the stator housing 41 may have any structure including a plurality of members including a member provided with the first groove 12A, a member forming the second gap 8A together with the member having the first groove 12A, a member provided with the second groove 12B, and a member forming the fourth gap 8B together with the member having the second groove 12B. Furthermore, the rotor housing 42 may be made from one member, or two or more members, for example.

Furthermore, in a motor 1b illustrated in FIG. 7, the top end surface of a third stator housing portion 41Ba in the axial direction is provided with the first groove 12A having a recessed shape that opens to the top-end side in the axial direction, across the entire circumference in the circumferential direction. Furthermore, the third stator housing portion 41Ba has a jaw portion jutting out toward the outer side in the radial direction. In the third stator housing portion 41Ba, the jaw portion is engaged with the first annular member 41D, and provides the first squeeze portion 9A between the third stator housing portion 41Ba and the first annular member 41D facing each other in the axial direction with the second gap 8A therebetween in axial direction, across the entire circumference in the circumferential direction. In this manner, the first internal space 100A is communicated with the first groove 12A provided to the top end surface of the third stator housing portion 41Ba in the axial direction.

As illustrated in FIGS. 6 and 7, in the motor 1a, 1b according to the second embodiment, the driving unit 2 including the stator 21 and the rotor 22, and the bearing 5 are arranged and disposed along the radial direction, and the bearing 5 and the rotation detector 3 are arranged and disposed along the axial direction. In this manner, an increase in the size of the motor 1a, 1b in the axial direction, that is, an increase in the height in the axial direction is suppressed.

In the motor 1a, 1b according to the second embodiment having the structure described above, by causing the rotor 22 to rotate with respect to the stator 21, the rotor housing 42 is rotated with respect to the stator housing 41 about the rotation axis AX, in the same manner as in the motor 1 according to the first embodiment.

A workpiece (not illustrated) is placed on the rotor housing 42. When the rotor housing 42 is rotated by the operation of the driving unit 2, the workpiece and the rotor housing 42 are both caused to rotate. The rotor housing 42 serves as an output shaft that is rotated about the rotation axis AX, as the driving unit 2 is operated.

The structures of the first gap 6A in the first sealing portion 7A, the third gap 6B in the second sealing portion 7B, the second gap 8A in the first squeeze portion 9A, and the fourth gap 8B in the second squeeze portion 9B are the same as those in the motor 1 according to the first embodiment.

In other words, in the motor 1a, 1b according to the embodiment, too, the first squeeze portion 9A and the second squeeze portion 9B are provided across the entire circumference in the circumferential direction, in the same manner as in the motor 1 according to the first embodiment. By reducing the sizes of the second gap 8A in the first squeeze portion 9A and the fourth gap 8B in the second squeeze portion 9B to extremely small, e.g., several micrometers to several tens of micrometers or so, even if the suction exhaust devices P1, P2 have a low sucking power and a low exhaust rate, the sucking pressure can be evened out across the entire circumference of the first squeeze portion 9A and the second squeeze portion 9B in the circumferential direction. In this manner, the first internal space 100A and the second internal space 100B are sealed effectively.

Furthermore, in the motor 1a, 1b according to the second embodiment, too, even when the first gap 6A in the first sealing portion 7A and the third gap 6B in the second sealing portion 7B are 0.1 millimeter to 0.5 millimeter or so, for example, and are greater than the second gap 8A in the first squeeze portion 9A and the fourth gap 8B in the second squeeze portion 9B, because the sucking pressure can be evened out due to the presence of the first squeeze portion 9A and the second squeeze portion 9B described above, the first internal space 100A and the second internal space 100B can be sealed effectively, in the same manner as in the motor 1 according to the first embodiment. In other words, in the motor 1a, 1b according to the second embodiment, too, because the air flows into the first sealing portion 7A and the second sealing portion 7B evenly across the entire circumference in the circumferential direction, the first internal space 100A and the second internal space 100B are sealed effectively, in the same manner as in the motor 1 according to the first embodiment. Therefore, the particles generated in the first internal space 100A and the second internal space 100B can be prevented from being emitted to the outside, reliably,

In the manner described above, the motor 1a, 1b according to the second embodiment enables the first sealing portion 7A and the second sealing portion 7B to function effectively at a low exhaust rate, in the same manner as in the motor 1 according to the first embodiment, and can prevent the particles generated in the first internal space 100A and the second internal space 100B of the motor 1a, 1b from being emitted to the outside, more reliably.

Furthermore, because it is possible to prevent the particles generated inside of the motor 1a, 1b from being emitted from the first sealing portion 7A and the second sealing portion 7B to the outside, in the same manner as in the motor 1 according to the first embodiment, in the motor 1a, 1b according to the second embodiment, too, a mechanical bearing such as a rolling bearing or a sliding bearing not requiring any external power source such as a power supply or compressed air can be used as the bearing 5.

Furthermore, in the same manner as in the motor 1 according to the first embodiment, because it is not necessary to use a low-particle grease having low particle producing characteristics as a lubricant grease for lubricating a moving part such as the bearing 5, an optimal lubricant grease suitable for the driving conditions can be used.

Furthermore, in the motor 1a, 1b according to the embodiment, in order to control the precision of the second gap 8A in the first squeeze portion 9A, it is sufficient if the precision of the surface facing the first annular member 41D of the third stator housing portion 41B, 41Ba, the precision of the surface facing the third stator housing portion 41B, 41Ba of the first annular member 41D, and the size of the stepped portion for forming the second gap 8A between the first annular member 41D and the third stator housing portion 41B, 41Ba are provided as the check items. Furthermore, in order to control the precision of the fourth gap 8B in the second squeeze portion 9B, it is sufficient if the precision of surface of the second stator housing portion 41C facing the second annular member 41E, the precision of the surface of the second annular member 41E facing the second stator housing portion 41C, and the size of the stepped portion for forming the fourth gap 8B between the second annular member 41E and the second stator housing portion 41C are provided as the check items. Therefore, the precision of the parts can be controlled with a smaller number of check items, and as a result, the yield rate of the motor 1a, 1b can be improved.

As explained above, in the motor 1a, 1b according to the second embodiment, the air is suctioned evenly from the first sealing portion 7A, and exhausted evenly from the first squeeze portion 9A via the first exhaust hole 13A, in the same manner as in the motor 1 according to the first embodiment. In this manner, because the first internal space 100A in the motor 1a, 1b is sealed effectively, the particles generated in the first internal space 100A can be prevented from being emitted to the outside, reliably.

Furthermore, by connecting the suction exhaust device P2 to the second exhaust hole 13B and operating the suction exhaust device P2, the air is suctioned evenly from the second sealing portion 7B, and exhausted evenly from the second squeeze portion 9B via the second exhaust hole 13B. In this manner, the second internal space 100B in the motor 1a, 1b is sealed effectively, and therefore, the particles generated in the second internal space 100B can be prevented from being emitted to the outside, reliably.

Furthermore, in the motor 1a, 1b according to the second embodiment, the number of check items for controlling the precision of the second gap 8A in the first squeeze portion 9A and the fourth gap 8B in the second squeeze portion 9B can be kept small, in the same manner as in the motor 1 according to the first embodiment, and as a result, the yield rate in the production of the motor 1a, 1b can be improved.

Furthermore, in the motor 1a, 1b according to the second embodiment, a mechanical bearing such as a rolling bearing or a sliding bearing not requiring any external power source such as a power supply or compressed air can be used, in the same manner as in the motor 1 according to the first embodiment.

Furthermore, in the motor 1a, 1b according to the second embodiment, because it is not necessary to use a low-particle grease having low particle producing characteristics as a lubricant grease for lubricating a moving part, an optimal lubricant grease suitable for the driving conditions can be used, in the same manner as in the motor 1 according to the first embodiment.

Furthermore, in the motor 1a, 1b according to the second embodiment, the driving unit 2 including the stator 21 and the rotor 22, and the bearing 5 are arranged and disposed along the radial direction, and the bearing 5 and the rotation detector 3 are arranged and disposed along the axial direction. In this manner, an increase in the size of the motor 1a, 1b in the axial direction, that is, an increase in the height in the axial direction can be suppressed.

### (Third Embodiment)

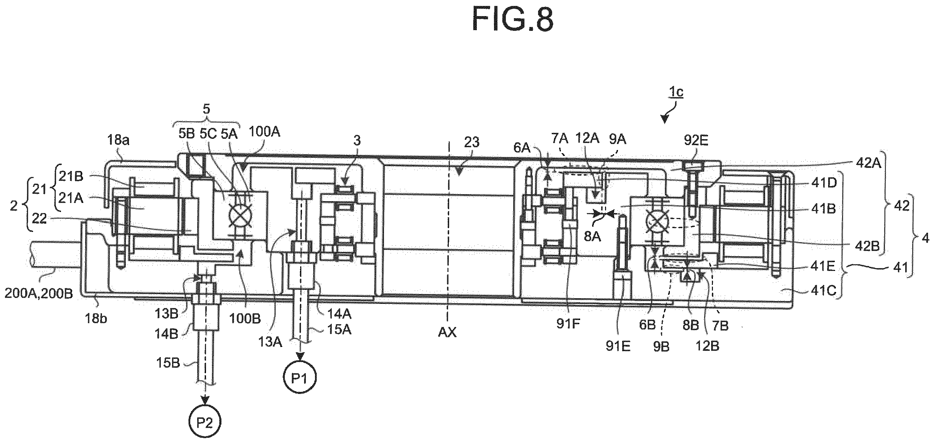

FIG. 8 is a cross-sectional view illustrating an example of a motor according to a third embodiment. The elements that are the same as those described in the first embodiment are given the same reference signs, and redundant explanations thereof will be omitted.

This motor 1c according to the third embodiment illustrated in FIG. 8 is an inner rotor motor, in the same manner as the motor 1 according to the first embodiment and the motor 1a, 1b according to the second embodiment.

As illustrated in FIG. 8, the stator housing 41 includes the third stator housing portion 41B, the second stator housing portion 41C, the first annular member 41D, and the second annular member 41E. The third stator housing portion 41B, the second stator housing portion 41C, the first annular member 41D, and the second annular member 41E are annular or cylindrical members. In the third embodiment, the second stator housing portion 41C also serves as a first stator housing portion.

Furthermore, as illustrated in FIG. 8, the rotor housing 42 includes two first rotor housing portion 42A and second rotor housing portion 42B. The first rotor housing portion 42A and the second rotor housing portion 42B are annular or cylindrical members. The first rotor housing portion 42A and the second rotor housing portion 42B hold the outer race 5B of the bearing 5 therebetween in the axial direction. The rotor 22 is fixed to the outer circumferential surface of the second rotor housing portion 42B. Furthermore, the rotor of the rotation detector 3 is fixed to the inner circumferential surface of the second rotor housing portion 42B. The first rotor housing portion 42A and the second rotor housing portion 42B are arranged in the order of the first rotor housing portion 42A and the second rotor housing portion 42B from the top-end side to the bottom-end side in the axial direction of the motor 1c according to the third embodiment illustrated in FIG. 8, and are fastened with a plurality of fastening members 92E, such as male screws, that are arranged in the circumferential direction, for example.

The first groove 12A having a recessed shape that opens to the top-end side in the axial direction is provided to the third stator housing portion 41B across the entire circumference in the circumferential direction. The stator of the rotation detector 3 is fixed to the inner circumferential surface of the third stator housing portion 41B.

The first annular member 41D is disposed in a manner covering the first groove 12A provided to the third stator housing portion 41B from the top-end side in the axial direction, and provides the first squeeze portion 9A where the first annular member 41D and the third stator housing portion 41B face each other in the radial direction with the second gap 8A therebetween, across the entire circumference in the circumferential direction. In this manner, the first internal space 100A is communicated with the first groove 12A provided to the third stator housing portion 41B.

Furthermore, the top end surface of the first annular member 41D in the axial direction provides the first sealing portion 7A where the top end surface of the first annular member 41D and the first rotor housing portion 42A faces each other in the axial direction with the first gap 6A therebetween, across the entire circumference in the circumferential direction. The third stator housing portion 41B and the first annular member 41D are arranged in the order of the first annular member 41D and the third stator housing portion 41B from the top-end side to the bottom-end side in the axial direction of the motor 1c according to the third embodiment illustrated in FIG. 8, and are fastened with a plurality of fastening members 91F, such as male screws, that are arranged in the circumferential direction, for example.

The second stator housing portion 41C together with the third stator housing portion 41B hold the inner race 5A of the bearing 5 therebetween in the axial direction. The second stator housing portion 41C and the third stator housing portion 41B are fastened with a plurality of fastening members 91E, such as male screws, that are arranged in the circumferential direction, for example. Furthermore, the second stator housing portion 41C has an annular portion extending in the radial direction from where the inner race 5A of the bearing 5 is fixed, and the stator 21 is fixed to an end of the annular portion in the radial direction. Furthermore, this annular portion of the second stator housing portion 41C is provided with the second groove 12B having a recessed shape that opens to the top-end side in the axial direction, across the entire circumference in the circumferential direction.

The second annular member 41E is disposed in a manner covering the second groove 12B provided to the second stator housing portion 41C from the top-end side in the axial direction, and provides the second squeeze portion 9B where the second annular member 41E and the second stator housing portion 41C face each other in axial direction with the fourth gap 8B therebetween, across the entire circumference in the circumferential direction. In this manner, the second internal space 100B is communicated with the second groove 12B provided to the second stator housing portion 41C.

Furthermore, the top end surface of the second annular member 41E in the axial direction provides the second sealing portion 7B where the top end surface of the second annular member 41E and the second rotor housing portion 42B face each other in the axial direction with the third gap 6B therebetween, across the entire circumference in the circumferential direction. The second stator housing portion 41C and the second annular member 41E are arranged in the order of the second annular member 41E and the second stator housing portion 41C from the top-end side to the bottom-end side in the axial direction of the motor 1c according to the third embodiment illustrated in FIG. 8, and are fastened with a plurality of fastening members (not illustrated), such as male screws, that are arranged in the circumferential direction, for example.

The stator housing 41 and the rotor housing 42 are not limited to the structures described above. The stator housing 41 may have any structure including a plurality of members including a member provided with the first groove 12A, a member forming the second gap 8A together with the member having the first groove 12A, a member provided with the second groove 12B, and a member forming the fourth gap 8B together with the member having the second groove 12B, for example. Furthermore, the rotor housing 42 may be made from one member, or three or more members, for example.

In this embodiment, it is preferable for the bearing 5 to be a cross roller bearing that uses cylindrical cross rollers as the rolling bodies 5C. The cross roller bearing is capable of tolerating a heavy load because the inner race 5A and the outer race 5B are brought into linear contact with the cross rollers. Furthermore, because the rotation axes of adjacent cross rollers are inclined by an angle of 90 degrees with respect to each other, the cross roller bearing exhibits high load tolerance from any directions, and its rigidity can be maintained to a high level.

As illustrated in FIG. 8, in the motor 1c according to the third embodiment, the driving unit 2, the bearing 5, and the rotation detector 3 are arranged and disposed along the radial direction. Specifically, the rotation detector 3, the bearing 5, and the driving unit 2 are arranged and disposed along the order listed herein from the side nearer to the rotation axis AX. In this manner, an increase in the size of the motor 1c in the axial direction, that is, an increase in the height in the axial direction is suppressed, more than that achieved by the motor 1a, 1b according to the second embodiment.

Furthermore, as illustrated in FIG. 8, the motor 1c according to the third embodiment is provided with a first protection cover member 18a and a second protection cover member 18b to prevent entry of foreign substances from one end (top end) of the stator 21 in the axial direction and the other end (bottom end) of the rotation detector 3 in axial direction.

The motor 1c according to the embodiment is designed to prevent the particles generated inside of the bearing 5 from being emitted to the outside. In other words, it is assumed that no particles are generated in the driving unit 2 or the rotation detector 3. Therefore, the motor 1c does not need to be provided with a structure for sealing the entire space inside of the motor 1c, as those illustrated in the first embodiment and the second embodiment. In this manner, the motor 1c capable of tolerating the use in a clean environment can be achieved, without increasing the size of the motor 1c.

In the motor 1c structured in the manner described above, by causing the rotor 22 to rotate with respect to the stator 21, the rotor housing 42 is rotated with respect to the stator housing 41 about the rotation axis AX.

A workpiece (not illustrated) is placed on the rotor housing 42. When the rotor housing 42 is rotated by the operation of the driving unit 2, the workpiece and the rotor housing 42 are both caused to rotate. The rotor housing 42 serves as an output shaft that is rotated about the rotation axis AX, as the driving unit 2 is operated.

The configurations of the first gap 6A in the first sealing portion 7A, the third gap 6B in the second sealing portion 7B, the second gap 8A in the first squeeze portion 9A, and the fourth gap 8B in the second squeeze portion 9B are the same as those in the motor 1 according to the first embodiment, and the motor 1a, 1b according to the second embodiment.

In other words, in the motor 1c according to the embodiment, too, in the same manner as in the motor 1 according to the first embodiment and the motor 1a, 1b according to the second embodiment, the first squeeze portion 9A and the second squeeze portion 9B are provided across the entire circumference in the circumferential direction. By reducing the sizes of the second gap 8A in the first squeeze portion 9A and the fourth gap 8B in the second squeeze portion 9B to extremely small, e.g., several micrometers to several tens of micrometers or so, the sucking pressure can be evened out across the entire circumference in the circumferential direction of the first squeeze portion 9A and the second squeeze portion 9B even if the suction exhaust devices P1, P2 have a low sucking power and a low exhaust rate. In this manner, the first internal space 100A and the second internal space 100B are sealed effectively.

Furthermore, in the motor 1c according to the third embodiment, too, in the same manner as in the motor 1 according to the first embodiment and the motor 1a, 1b according to the second embodiment, even when the first gap 6A in the first sealing portion 7A and the third gap 6B in the second sealing portion 7B are within a range of 0.1 millimeter to 0.5 millimeter or so, for example, and greater than the second gap 8A in the first squeeze portion 9A and the fourth gap 8B in the second squeeze portion 9B, the first internal space 100A and the second internal space 100B can be sealed effectively, because the sucking pressure can be evened out due to the presence of the first squeeze portion 9A and the second squeeze portion 9B described above. In other words, in the motor 1c according to the third embodiment, too, because the air flows into the first sealing portion 7A and the second sealing portion 7B evenly across the entire circumference in the circumferential direction, in the same manner as in the motor 1 according to the first embodiment and the motor 1a, 1b according to the second embodiment, the first internal space 100A and the second internal space 100B are sealed effectively. Therefore, the particles generated in the first internal space 100A and the second internal space 100B can be prevented from being emitted to the outside, reliably.

As explained above, in the motor 1c according to the third embodiment, the air is suctioned evenly from the first sealing portion 7A, and exhausted evenly from the first squeeze portion 9A via the first exhaust hole 13A, in the same manner as in the motor 1 according to the first embodiment and the motor 1a, 1b according to the second embodiment. In this manner, the first internal space 100A in the motor 1c is sealed effectively. Therefore, the particles generated in the first internal space 100A can be prevented from being emitted to the outside, reliably.

Furthermore, by connecting the suction exhaust device P2 to the second exhaust hole 13B and operating the suction exhaust device P2, the air is suctioned evenly from the second sealing portion 7B, and exhausted evenly from the second squeeze portion 9B via the second exhaust hole 13B. In this manner, the second internal space 100B in the motor 1c is sealed effectively. Therefore, the particles generated in the second internal space 100B can be prevented from being emitted to the outside, reliably.

Furthermore, in the motor 1c according to the third embodiment, the number of check items for controlling the precision of the second gap 8A in the first squeeze portion 9A and the fourth gap 8B in the second squeeze portion 9B can be kept small, in the same manner as in the motor 1 according to the first embodiment and the motor 1a, 1b according to the second embodiment. As a result, the yield rate in the production of the motor 1c can be improved.

Furthermore, in the motor 1c according to the third embodiment, a mechanical bearing such as a rolling bearing or a sliding bearing not requiring any external power source such as a power supply or compressed air can be used, in the same manner as in the motor 1 according to the first embodiment and the motor 1a, 1b according to the second embodiment.

Furthermore, in the motor 1c according to the third embodiment, because it is not necessary to use a low-particle grease having low particle producing characteristics as a lubricant grease for lubricating a moving part, an optimal lubricant grease suitable for the driving conditions can be used, in the same manner as in the motor 1 according to the first embodiment and the motor 1a, 1b according to the second embodiment.

Furthermore, in the motor 1c according to the third embodiment, by using a cross roller bearing as the bearing 5, high load tolerance from any directions can be achieved, and the rigidity can be maintained to a high level.

Furthermore, in the motor 1c according to the third embodiment, the driving unit 2, the bearing 5, and the rotation detector 3 are arranged and disposed along the radial direction. In this manner, an increase in the size of the motor 1c in the axial direction, that is, an increase in the height in the axial direction can be suppressed, compared with the motor 1a, 1b according to the second embodiment.

Furthermore, by using the structure of the motor 1c according to the third embodiment in a motor designed under an assumption that no particles are generated in the driving unit 2 or the rotation detector 3, a motor 1c capable of tolerating the use in a clean environment can be achieved, without increasing the size of the motor 1c.

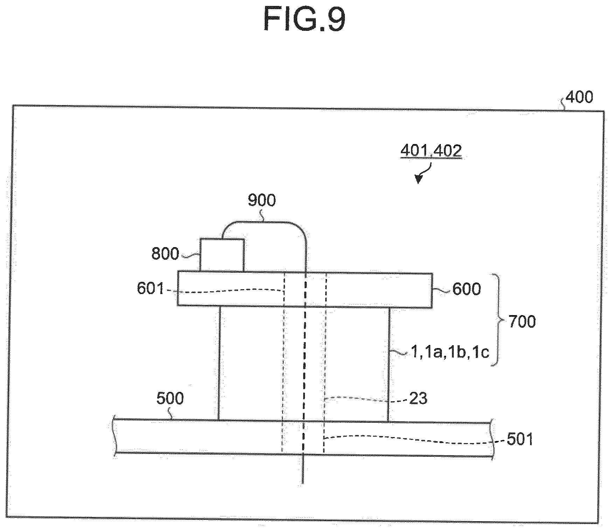

FIG. 9 is a schematic illustrating an application example of the motors according to the embodiments. The motor 1, 1a, 1b, 1c according to the embodiments is used in a semiconductor manufacturing apparatus 401 or a flat display manufacturing apparatus 402 in a clean environment 400, for example. A part (stator housing) of the housing (chassis) of the motor 1, 1a, 1b, 1c is supported on a base 500 with a fastening member. The fastening member is a screw, a bolt, or a pin, for example. In this manner, the motor 1, 1a, 1b, 1c is fixed to the base 500.

An actuator 700 includes any one of the motors 1, 1a, 1b, 1c, and a driven object 600 that is driven by the motor 1, 1a, 1b, 1c. The driven object 600 is supported on a part (stator housing) of the housing (chassis) of the motor 1, 1a, 1b, 1c with a fastening member. The fastening member is a screw, a bolt, or a pin, for example. In this manner, the driven object 600 is fixed to the motor 1, 1a, 1b, 1c.

A product to be manufactured 800 is disposed on top of the driven object 600. The base 500 has a hollow hole 501, and the driven object 600 has a hollow hole 601.

A cable 900 for supplying power or signals to the product to be manufactured 800 is inserted through the hollow hole 501 of the base 500, the hollow hole 23 of the motor 1, 1a, 1b, 1c, and the hollow hole 601 of the driven object 600, and is connected to the product to be manufactured 800.

As described above, because the motor 1, 1a, 1b, 1c according to the embodiments can prevent the particles generated inside from being emitted to the outside, reliably, the motor 1, 1a, 1b, 1c according to the embodiments or the actuator 700 including the motor 1, 1a, 1b, 1c according to the embodiments is suitable for the use in the semiconductor manufacturing apparatus 401 or the flat display manufacturing apparatus 402, in a clean environment 400 such as that illustrated in FIG. 9.

### Reference Signs List

- 1, 1a, 1b, 1c: motor
- 2: driving unit
- 3: rotation detector
- 4: housing
- 5: bearing
- 5A: inner race
- 5B: outer race
- 5C: rolling body
- 6A: first gap (first suction side gap)
- 6B: third gap (second suction side gap)
- 7A: first sealing portion
- 7B: second sealing portion
- 8A: second gap (first exhaust side gap)
- 8B: fourth gap (second exhaust side gap)
- 9A: first squeeze portion
- 9B: second squeeze portion
- 11: spacer member
- 12A: first groove
- 12B: second groove
- 13A: first exhaust hole
- 13B: second exhaust hole
- 14A, 14B: joint
- 15A, 15B: exhaust tube
- 16: recess
- 17: O ring
- 18a: first protection cover member
- 18b: second protection cover member
- 19: first cable insertion hole
- 20: second cable insertion hole
- 21: stator
- 21A: stator core
- 21B: coil
- 22: rotor
- 23: hollow hole
- 41: stator housing
- 41A: first stator housing portion
- 41AA, 41AB: member (first stator housing portion)
- 41B, 41Ba: third stator housing portion
- 41C: second stator housing portion
- 41D: first annular member
- 41E: the second annular member
- 41F: bearing support member
- 41G: rotation detector fixing portion
- 42: rotor housing
- 42A: first rotor housing portion
- 42B: second rotor housing portion
- 42C: third rotor housing portion
- 42D: fourth rotor housing portion
- 100A: first internal space
- 100B: second internal space
- 200A, 200B: cable
- 400: clean environment
- 401: semiconductor manufacturing apparatus
- 402: flat display manufacturing apparatus
- 500: base
- 501: hollow hole (base)
- 600: driven object
- 601: hollow hole (driven object)
- 700: actuator
- 800: product to be manufactured
- 900: cable (product to be manufactured)
- AX: rotation axis
- P1, P2: suction exhaust device

## Claims

1. A motor comprising:
a stator that is provided with a coil and a stator core;
a rotor that is disposed on an inner side of the stator in a radial direction, and rotated relatively with respect to the stator;
a rotor housing that is rotated with the rotor;
a stator housing that has a first exhaust hole through which air is exhausted by suctioning, and to which the stator is fixed;
a bearing that supports the rotor housing rotatably with respect to the stator housing;
a first sealing portion where the stator housing and the rotor housing face each other with a first gap therebetween across an entire circumference in a circumferential direction, with the first sealing portion being provided between an internal space and outside of the stator housing; and
a first squeeze portion that is at a position different from the first sealing portion, and that has a second gap connecting the internal space and the first exhaust hole.

2. The motor according to claim 1, further comprising a first groove that is positioned between the second gap and the first exhaust hole, and is provided to the stator housing across the entire circumference in the circumferential direction, in a manner extending along the second gap.

3. The motor according to claim 1 or 2, wherein the second gap is at a position where the stator housing and a first annular member face each other, and a stepped portion is provided to a facing surface of the stator housing, the facing surface facing the first annular member, or to the first annular member.

4. The motor according to claim 1 or 2, wherein
the second gap is at a position where the stator housing and the first annular member face each other, and
a spacer member interposed between the stator housing and the first annular member is provided.

5. The motor according to any one of claims 1 to 4, wherein
the internal space is partitioned into a first internal space and a second internal space by the bearing,
the stator housing also has a second exhaust hole, and
the motor further comprises:
the first sealing portion where the stator housing and the rotor housing face each other with the first gap therebetween across the entire circumference in the circumferential direction, with the first sealing portion being provided between the first internal space and the outside;
the first squeeze portion that is at a position different from the first sealing portion, and that has the second gap connecting the first internal space and the first exhaust hole;
a second sealing portion where the stator housing and the rotor housing face each other with a third gap therebetween across the entire circumference in the circumferential direction, with the second sealing portion being provided between the second internal space and the outside; and
a second squeeze portion that is at a position different from the first sealing portion, the second sealing portion, and the first squeeze portion, and that is provided with a fourth gap connecting the second internal space and the second exhaust hole.

6. The motor according to claim 5, further comprising a second groove that is positioned between the fourth gap and the second exhaust hole, and that is provided to the entire circumference of the stator housing in the circumferential direction, in a manner extending along the fourth gap.

7. The motor according to claim 5 or 6, wherein the fourth gap is at a position where the stator housing and the second annular member face each other, and a stepped portion is provided to a facing surface of the stator housing, the facing surface facing the second annular member, or to the second annular member.

8. The motor according to claim 5 or 6, wherein
the fourth gap is at a position where the stator housing and the second annular member face each other, and
a spacer member interposed between the stator housing and the second annular member is provided.

9. The motor according to any one of claims 1 to 8, wherein
the stator housing includes:
a first stator housing portion that is provided with a first cable insertion hole through which a cable for driving the motor or for detecting a position is passed in an axial direction that is in parallel with a rotation axis of the rotor; and
a second stator housing member that is stacked with and fixed to the first stator housing portion in the axial direction, and that is provided with a second cable insertion hole through which the cable is passed in the axial direction, wherein
a central position of the first cable insertion hole and a central position of the second cable insertion hole in the radial direction are offset from each other in such a manner that, when the first stator housing portion and the second stator housing portion are stacked with and fixed to each other in the axial direction, an area of an opening where the first cable insertion hole and the second cable insertion hole overlap each other in the axial direction substantially matches a cross-sectional area of the cable.

10. The motor according to claim 2, wherein the stator housing includes:
a groove component member that has a first surface perpendicularly intersecting with an axial direction that is a direction in parallel with a rotation axis of the rotor, and facing the first gap with the rotor housing positioned face-to-face, a second surface facing the second gap and positioned on an opposite side of the first surface, and the first groove; and
an O ring that is interposed between the groove component member and another component member making up the stator housing.

11. The motor according to any one of claims 1 to 10, further comprising a rotation detector that detects rotation of the rotor with respect to the stator, wherein
a driving unit including the stator and the rotor, the bearing, and the rotation detector are arranged and disposed along the axial direction.

12. The motor according to any one of claims 1 to 10, further comprising a rotation detector that detects rotation of the rotor with respect to the stator, wherein
a driving unit including the stator and the rotor, and the bearing are arranged and disposed along the radial direction, and the bearing and the rotation detector are arranged and disposed along the axial direction.

13. The motor according to any one of claims 1 to 10, further comprising a rotation detector that detects rotation of the rotor with respect to the stator, wherein
a driving unit including the stator and the rotor, the bearing, and the rotation detector are arranged and disposed along the radial direction.

14. The motor according to any one of claims 1 to 13, wherein the bearing is a rolling bearing or a sliding bearing.

15. The motor according to any one of claims 1 to 13, wherein the bearing is a cross roller bearing.

16. An actuator comprising:
the motor according to any one of claims 1 to 15; and
a driven object that is driven by the motor.

17. A semiconductor manufacturing apparatus comprising the motor according to any one of claims 1 to 15.

18. A flat display manufacturing apparatus comprising the motor according to any one of claims 1 to 15.
